# EUROPEAN PATENT SPECIFICATION

(11) **EP 2 997 680 B1**
(45) Date of publication and mention of the grant of the patent: **15.04.2020**
(21) Application number: 14798225.0
(22) Date of filing: 14.05.2014
(51) Int. Cl.: H04B 7/26, H04L 5/14, H04L 5/00

(54) **INTERFERENCE MEASUREMENT METHOD AND APPARATUS FOR CONTROLLING INTER-CELL INTERFERENCE IN WIRELESS COMMUNICATION SYSTEM**
INTERFERENZMESSVERFAHREN UND -VORRICHTUNG ZUR STEUERUNG DER ZWISCHENZELLINTERFERENZ IN EINEM DRAHTLOSKOMMUNIKATIONSSYSTEM
MÉTHODE ET APPAREIL DE MESURE D'INTERFÉRENCES POUR GÉRER DES INTERFÉRENCES ENTRE CELLULES DANS UN SYSTÈME DE COMMUNICATION SANS FIL

(30) Priority: 14.05.2013 KR 20130054630
(43) Date of publication of application: 23.03.2016
(73) Proprietor: Samsung Electronics Co., Ltd., Suwon-si, Gyeonggi-do 443-742 (KR)
(72) Inventor: JI, Hyoungju, Seoul 138-910 (KR); KIM, Youngbum, Seoul 130-794 (KR); CHOI, Seunghoon, Suwon-si Gyeonggi-do 443-280 (KR)
(74) Representative: Nederlandsch Octrooibureau
(86) International application number: PCT/KR2014/004335
(87) International publication number: WO 2014/185713

(56) References cited:
- EP-A1- 2 493 108
- WO-A1-2010/099485
- WO-A1-2012/095023
- KR-A- 20120 133 982
- US-A1- 2002 196 766
- US-A1- 2011 032 853
- US-A1- 2011 261 714
- US-A1- 2012 300 681
- US-A1- 2014 160 967
- US-A1- 2014 233 439

## Description

### Technical Field

The present invention relates generally to an interference measurement method and apparatus for controlling inter-cell interference in a Time Division Duplex (TDD) radio communication system, and more particularly, to a method and apparatus for configuring a radio frame for controlling interference with adjacent base stations and measuring interference based on the radio frame configured as such.

Also, the present disclosure relates to a method of scheduling a terminal in such a way of exchanging measurement information among base stations and scheduling the terminal based on the measurement information.

Also, the present disclosure relates to a method of configuring information to be exchanged between base stations, forming downlink subframe, and scheduling terminals in such a way that a base station inserts uplink symbol period in a certain downlink subframe and notifies neighbor base station of this so as to make it possible to measure reference signals of neighbor cells without interference of the terminal within the service area of the base station.

### Background Art

Mobile communication systems were developed to provide mobile users with communication services. With the rapid advance of technologies, the mobile communication systems have evolved to the level capable of providing high speed data communication service beyond the early voice-oriented services.

Recently, standardization for a Long Term Evolution (LTE) system, as one of the next-generation mobile communication systems, is underway in the 3rd Generation Partnership Project (3GPP). LTE is a technology for realizing high-speed packet-based communications with the data rate of up to 100 Mbps, which is higher than the currently available data rate, and its standardization is almost complete. In line with the completion of the LTE standardization, an LTE-Advanced (LTE-A) system is now under discussion, which improves a transfer rate by combining the LTE communication system with several new technologies. The term LTE system as used herein may be construed to include the legacy LTE system and the LTE-A system.

EP 2 493 108 A1 discloses a data transmission and receiving method and apparatus with cross-subframe control in a wireless network. The data transmission method discloses sending a message on a physical downlink control channel to request for reduced interference and exchanging data on resources having reduced interference due to message sent on the physical downlink control channel.

WO 2012/095023 A1 discloses an interference detection method, device and system. The method discloses a measuring base station acquiring a measurement reference signal of an interfering base station and configuration information of the measurement reference signal, and the measuring base station detecting, according to the configuration information, a reception quality value of the measurement reference signal of the interfering base station.

### Disclosure of Invention

### Technical Problem

In the legacy system, the transmission directions of time and frequency resources are identical among the base stations. That is, if a base station performs downlink transmission using certain time/frequency resource, this means that the neighbor base stations use the corresponding time/frequency resource. In this case, the terminal always undergoes downlink interference caused by downlink signals of the neighbor base stations on the downlink resource and uplink interference caused by uplink signals of the neighbor base stations on the uplink resource. If the adjacent base stations use the resources different in direction, this may cause different type of interference. This means that a base station may undergo both the downlink and uplink interferences while a neighbor base station uses certain time/frequency resource for downlink and therefore there is a need of measuring interferences in consideration of the location of the transmitter causing interference and controlling inter-cell interference based on the measurement result.

### Solution to Problem

The invention is described in the claims. The embodiments which do not fall within the scope of the claims are to be interpreted as examples useful for understanding the invention.

### Advantageous Effects of Invention

The interference measurement method and apparatus of the present disclosure is advantageous in terms of controlling interference in such a way of predicting uplink coverage of a neighbor cell based on the first interference measurement subframe set and downlink coverage of the neighbor cell based on the second interference measurement subframe set and controlling interference on the time/frequency resource, on which inter-base station interference occurs in uplink and downlink, based on the first and second interference informations received from the neighbor base station.

Also, the interference measurement method and apparatus of the present disclosure is advantageous in predicting the relative location of the neighbor base station and changing the configuration of the cell dynamically based on the prediction in the range of not incurring interference, by measuring the interference transmitted by the neighbor base station through the second interference measurement subframe set.

### Brief Description of Drawings

FIG. 1 is a diagram illustrating the frequency band structure of a TDD system;
FIG. 2 is a diagram illustrating TDD Uplink-Downlink (UL-DL) configurations for use in the LTE system to which the present disclosure is applied;
FIG. 3 is a diagram illustrating an exemplary LTE system to which the present disclosure is applied;
FIG. 4 is a diagram for explaining propagation ranges of adjacent base stations;
FIG. 5 is a diagram for explaining a method for measuring inter-base station interference according to an embodiment of the present disclosure;
FIG. 6 is a diagram illustrating the first and second radio frame configurations according to an embodiment of the present disclosure;
FIG. 7 is a diagram illustrating the structures of the first and second radio frame configurations according to another embodiment of the preset disclosure;
FIG. 8 is a diagram illustrating the structures of the first and second radio frame configurations according to another embodiment of the preset disclosure;
FIG. 9 is a flowchart illustrating the procedure of the base station in the interference measurement method according to an embodiment of the present disclosure;
FIG. 10 is a flowchart illustrating the procedure of the terminal in the interference measurement method according to an embodiment of the present disclosure;
FIG. 11 is a block diagram illustrating a configuration of the base station according to an embodiment of the present disclosure; and
FIG. 12 is a block diagram illustrating a configuration of the terminal according to an embodiment of the present disclosure.

### Mode for the Invention

Detailed description of well-known functions and structures incorporated herein may be omitted to avoid obscuring the subject matter of the present disclosure. Exemplary embodiments of the present disclosure are described with reference to the accompanying drawings in detail.

Unlike the Frequency Division Duplex (FDD) system suing different frequency bands for downlink and uplink, the TDD system uses the same frequency band for both the downlink and uplink.

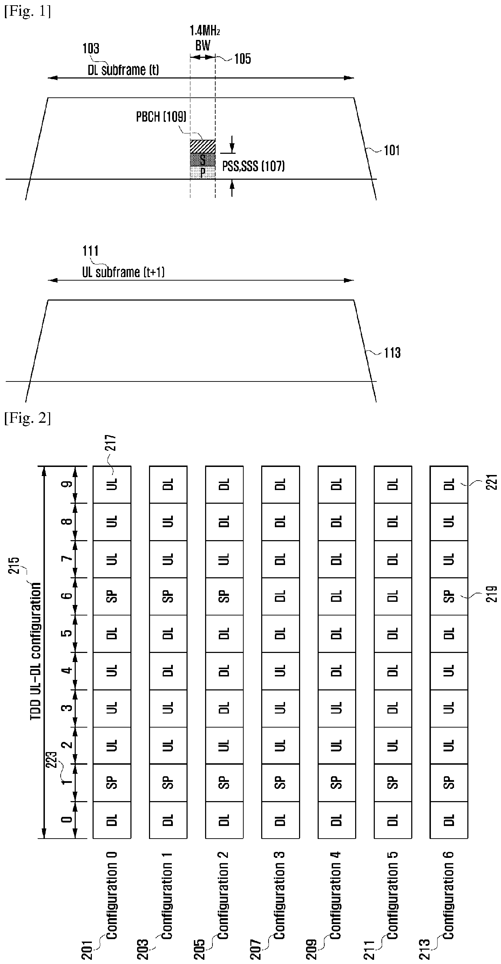

FIG. 1 is a diagram illustrating the frequency band structure of a TDD system. In FIG. 1, reference number 101 denotes a downlink frequency band, and reference number 113 denotes an uplink frequency band.

As shown in FIG. 1, the downlink subframe 103 and uplink subframe 111 use the same frequency band and separated in the time domain. In the case of TDD downlink subframe 103, it may carry Physical Broadcast Channel (PBCH) 109 and synchronization signal 107, i.e. Primary Synchronization Signal (PSS) and Secondary Synchronization Signal (SSS), on 1.4MHZ bandwidth around the center frequency of downlink as denoted by reference number 105, the synchronization signal being transmitted to the terminal at a time predetermined during the downlink.

In an embodiment, it is typical that the downlink and uplink traffic amounts differ from each other. That is, the downlink traffic amount may increase at a certain time point and the uplink traffic amount may increase at another time point depending on the change in number of terminals within the cell and traffic amount per terminal.

Since it is typical that the uplink and downlink are equal in bandwidth in Frequency Division Duplex (FDD) system, the frequency resources are maintained evenly independently of the uplink and downlink traffic amount and thus resource waste may occur temporarily due to the unbalance between the uplink and downlink traffic amounts. However, the TDD system is capable of adjusting the ratio between downlink and uplink on the same frequency band, thereby overcoming such resource waste problem.

In the real operation, however, it is difficult to adjust the ratio between the downlink and uplink dynamically. One of the representative reasons is the interference caused by the neighbor cells.

In the case of FDD system, the downlink signal received by the terminal is influenced by the interference of the downlink signals of the neighbor cells, and the uplink signal transmitted by the terminal is influenced by the interference of the uplink signals of the adjacent terminals. In downlink, it is possible to predict the maximum interference amount since the fixed base station use predetermined power and thus the corresponding interference may be controlled. In uplink, it is possible to cancel the interference through uplink power control because the adjacent terminals use the bandwidth partially and the transmit power causing the interference is relatively low.

In the case that two adjacent cells operate in different directions (e.g. if base station 1 operates in uplink while base station 2 adjacent to base station 1 operates in downlink), the transmission power of one cell may cause interference to the transmission power of the terminal operating in downlink within the other cell.

Since the transmission power of the base station is over 100 folds higher than that of the terminal, it may become impossible for one base station to receive the signal transmitted by the terminal due to the interference of the signal transmitted by another base station.

As a consequence, it is difficult for the cells to operate in different directions in the coverage area of the macro base station operating at high transmission power level. In the communication system supporting both the FDD and TDD such as LTE system, various TDD configurations are adopted in consideration of long term traffic among the base stations in TDD mode.

FIG. 2 is a diagram illustrating TDD Uplink-Downlink (UL-DL) configurations for use in the LTE system to which the present disclosure is applied.

As shown in FIG. 2, there are 7 TDD UL-DL configurations, each consisted of 10 subframes. The 7 TDD UL-DL configurations 0 to 6 are differentiated by the ratio between uplink and downlink subframes.

For example, the configuration 0 201 includes total 6 uplink subframes which is greatest in number among the 7 configurations, i.e. subframe#2, subframe#3, subframe#4, subframe#7, subframe#8, and subframe#9, as denoted by reference number 217. The configuration 0 201 also includes total two downlink subframes, i.e. subframe#0 and subframe#5, as denoted by reference number 221.

The configuration 201 also includes two special subframes, i.e. subframe#1 and subframe#6, as denoted by reference number 219, and each special subframe includes a downlink part and an uplink part. There is a guard period between the downlink and uplink parts to protect against downlink0uplink interference. The special subframe 219 is provided for switching from downlink to uplink, and the downlink part may be used only for data channel transmission while the uplink part for the preamble transmission for initial attach or channel estimation.

The configuration 211 includes a largest number of downlink subframes, i.e. subframe#0, subframe#3, subframe#4, subframe#5, subframe#6, subframe#7, subframe#8, and subframe#9, as denoted by reference number 221. The subframe#2 is used as special subframe.

A TDD radio frame configuration is selected based on the long traffic influence, and the selected TDD radio frame configuration is used by all the predetermined base stations. Currently, if it becomes necessary to change the configuration due to the change of traffic environment, the entire system stops operation and resumes after the radio frame configuration is updated in all of the cells such that all of the terminals have to perform the access procedure again. Such a configuration switching procedure is inefficient and almost impossible to perform.

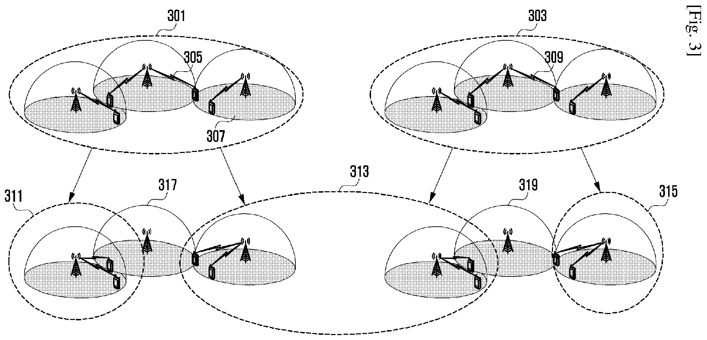

FIG. 3 is a diagram illustrating an exemplary LTE system to which the present disclosure is applied.

A small cell is likely to be less vulnerable to the interference caused by both the uplink and downlink collisions as compared to the macro cell, and this is because the small cell operates with the transmission power as low as terminal transmission power and has small coverage which means small interference range.

In the case that the neighbor cells operate with different radio frame configurations, however, the interference caused by mismatch in transmission direction between neighbor cells makes it difficult for the base station to communicate with the terminal. The macro cell 301 has a large coverage area in which a plurality of small cells 307 having relatively small coverage areas is deployed as shown in FIG. 3.

In the case of the small cells deployed in the macro cells 301 and 303 that are distant geographically, the small cells, although they operate with different radio frame configurations, are unlikely to interfere to each other because of their low transmission powers.

If the macro cells 301 and 303 differ in ratio between downlink and uplink traffics, the influences of the traffics of the macro cells 301 and 303 vary as time goes by even when the macro cells 301 and 303 operate with the different radio frame configurations. In this case, if the terminals connected to small cells as denoted by reference number 305 and 309 exist no longer, it is effective to use different TDD configuration informations for the macro cells 301 and 303. Accordingly, in order for the terminals and base station to operate in adaptation to the traffic effectively, it is necessary for the cells using the same configuration information to change dynamically to influence of the time-varying traffic. Such change has to be allowed in the range guaranteeing no significant interference to the terminal and base station. Accordingly, if there is no traffic on the connections to the small cells as denoted by reference numbers 305 and 309, the small cells 311,313, and 315 may operate with different radio frame configurations. For this purpose, it is necessary for each base station to check the interferences from neighbor cells effectively.

In the system such as LTE, two interference measurement functions are available. One is the terminal-initiated measurement in which the terminal measures the interference from the neighbor cell and reports the measurement result to the base station. The other is the network-initiated measurement in which the base station measures the interference from neighbor cell in uplink directly. Here, the interference measured by the terminal is the interference caused by the downlink signal transmitted by the neighbor base station in its downlink reception period, and the interference measured by the base station is the interference caused by the uplink signal transmitted by the terminal located within the service area of a neighbor base station in its uplink reception period.

These interference measurement schemes are under the assumption that there is no inter-base station uplink interference and no inter-base station downlink interference as in the legacy TDD system. In the dynamic TDD system, however, it is necessary to interference between downlink and uplink for cancelling or adjusting inter-cell interference and thus there is a need of a function capable of allowing a base station to measure the transmission power of the neighbor base station. That is, the base station has to measure the transmission power of the neighbor base station as an interferer base station for use in determining uplink transmission power of the terminal served by it by taking notice of the downlink transmission of the neighbor base station.

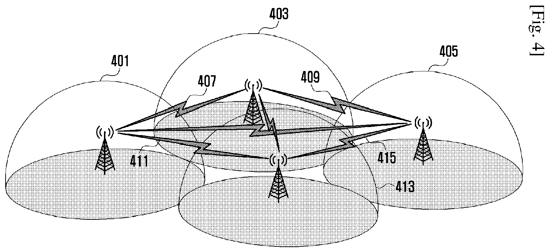

FIG. 4 is a diagram for explaining propagation ranges of adjacent base stations.

Referring to FIG. 4, reference numbers 401, 403, 405, and 407 denote the coverage areas of corresponding small base stations. Each base station is capable of checking only the uplink interference information of the neighbor cells and the uplink reception power information of the neighbor cells. In order to check the interference caused by the collision between uplink and downlink, it is necessary to check the influences from the neighbor cells as denoted by reference numbers 411, 413, 409, and 415. In the case that the base stations operate with different radio frame configurations, each base station does not know the radio frame configurations of neighbor base stations and thus uplink and downlink timings thereof. In order for the base station to measure the interferences from the neighbor cells and adjust the transmission power of the terminal within its cell based thereon, it is necessary the exchange measurement information with neighbor base station for use in actual measurement and, as a consequence, the measurement results. Also, there is a need of a method for the base station to send the terminal the information based on the neighbor base station information and interference measurement information and update the power information recognized by the terminal so as to make it possible to perform data communication independently of uplink and downlink collisions with neighbor base stations. The present disclosure proposes a technology capable of solving and managing the above problems effectively.

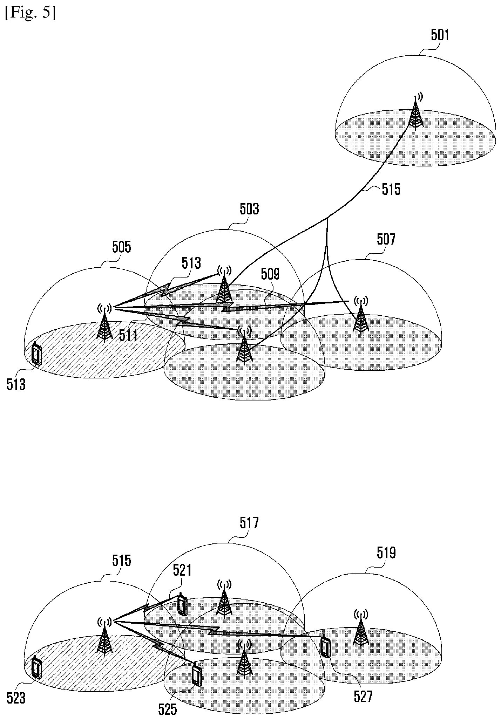

FIG. 5 is a diagram for explaining a method for measuring inter-base station interference according to an embodiment of the present disclosure.

Referring to FIG. 5, the first base station 505 sends the second base station 503 the first radio frame configuration information and the second radio frame configuration information.

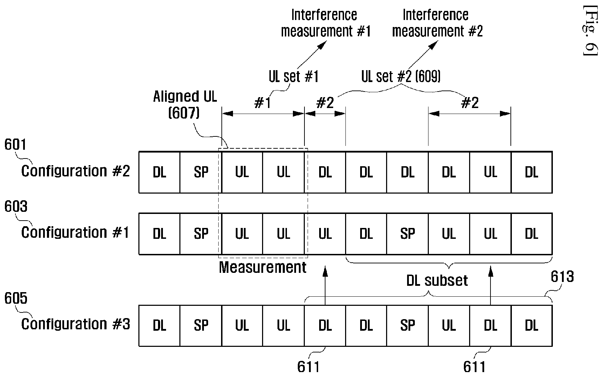

FIG. 6 is a diagram illustrating the first and second radio frame configurations according to an embodiment of the present disclosure. Referring to FIG. 6, a set of the uplink subframes of the second UL-DL configuration is a subset or corresponding to the set of the uplink subframes of the first UL-DL configuration.

If the first and second radio frame configurations informations are received, the second base station 503 selects the intersection of the uplink subframes sets of the first and second UL-DL configurations as a first interference measurement subframe set. That is, the first interference measurement subframe set consists of the subframes that are downlink commonly in both the first and second radio frame configurations.

The second base station 503 also configures the difference set of the uplink subframes between the first and second radio frame configurations as a second interference measurement subframe set. That is, the second interference measurement subframe set consists of the subframes which are different in direction in the first and second radio frame configurations. For example, the second interference measurement subframe set consists of the subframes which are uplink in one of the first and second radio frame configurations but downlink in the other.

After configuring the interference measurement subframe sets, the second base station 503 measures the uplink interference signal of the neighbor cell in the first interference measurement subframe set and the downlink interference signal in the second interference measurement subframe set. The second base station 503 sends the first base station 505 the first and second interference measurement informations. The first or second base station 505 or 503 send the terminal 523 a third radio frame configuration information including at least one of radio frame configuration based on the first and second radio frame configurations informations received from the neighbor base station. The subframe indices which used for measurement of the first and second interference measurement informations are transmitted separately, and this may be necessary for the base station to notify of the resource used, among the first and second measurement resources determined based on the first and second radio frame configuration informations, in more detail. The base station also may send the time information to notify how old the measured measurement informations are. For example, the System Frame Number (SFN) or time information acquired through GPS or network may be transmitted together. This is because if there is any delay of communication between base stations it is necessary to notify of the delay. In the above embodiment, the first radio frame configuration information is the information on the reference radio frame configuration for the cells (first and second base stations) shared among all base stations. The second radio frame configuration information is the information on the radio frame configuration for the first base station 505 to use in a predetermined time period in adaptation to the traffic condition of its own cell. Here, the uplink subframes of the second radio frame configuration corresponds to a subset of the uplink subframes of the first radio frame configuration to indicate the probability of downlink use of a certain subframe through comparison with the first UL-DL configuration as the reference configuration used between the base stations currently. Accordingly, the second radio frame configuration information include the information on the base stations which indicating the sub frames capable of being used for downlink transmission in the first radio frame configuration information.

In an embodiment, the second TDD UL-DL radio configuration information may be identical with the second radio frame configuration information and, in this case, the second base station 503 is aware that the first base station 505 does not change the radio frame configuration dynamically any longer.

If the first and second radio frame configurations 603 and 601 are received from the first base station 505, the second base station 503 compares the first and second radio frame configurations and is aware that the first base station 505 uses the subframes #4, 6, 7, and 8, that are downlink and special subframes of the second base station 503, for downlink transmission. Accordingly, the second base station 513 configures the first and second interference measurement subframe sets based thereon.

The first interference measurement subframe set consists of the subframes that are uplink in both the first and second radio frame configurations 603 and 601 as denoted by reference number 607. In FIG. 6, subframes #2 and #3 belong to the first interference measurement subframe set.

The second interference measurement subframe set consists of the subframes that are downlink in the first radio frame configuration 603 but not downlink in the second radio frame configuration 601 as denoted by reference number 609.

Since the first base station 505 is always in uplink during the first interference measurement subframe set, the signal which the second base station 503 receives during the first interference measurement subframe set includes the interference caused by the uplink signal (first interference signal) transmitted by the second base station 505.

In contrast, since the first base station 505 is in downlink during the second interference measurement subframe set, the signal which the second base station 503 receives during the second interference measurement subframe set include interference caused by the downlink signal (second interference signal) of the first base station 505.

In the case of the second interference measurement subframe set, the first base station 505 may operate in any of both the uplink and downlink actually. Typically, since the base station determines the second radio frame configuration based on the required uplink resource amount, it is unlikely to use the corresponding subframes for uplink. Accordingly, the neighbor base station may perform downlink transmission or mutes during the second interference measurement subframe set. Accordingly, the second base station 513 measures the interference amount through interferer signal level at the corresponding subframes and reflects this the second interference measurement subframe set.

The second base station 513 feeds back the first and second interference informations on the interferences measured during the first and second interference measurement subframe sets to the neighboring first base station 505. If the feedback information is received, the first base station 505 may predict the interference level at the neighbor base station when it performs downlink transmission during the second interference measurement subframe set and check the distance from the neighbor cell.

Likewise, after measuring interference during the first and second interference measurement subframe sets, the second base station 503 may predict the distance from the neighbor base station based on the measurement result. The second base station 503 also may predict the distance from the terminal located with the coverage of the neighbor base station based on the measurement result during the first interference measurement subframe set. The second base station 503 determines the transmission powers of the terminal at the subframes corresponding to the first and second interference measurement subframe sets and sends the terminal the scheduling control channel including the determined information. In this way, the base station is capable of controlling the interference from the neighbor cells.

The first base station 505 or the second base station 513 send the terminal the third radio frame configuration information. The third radio frame configuration information includes the uplink subframe subset of the first radio frame configuration and the downlink subframe subset of the second radio frame configuration. In this case, there is no actual increase in number of uplink subframes as compared to the first radio frame configuration but increase in number of subframes as compared to the second radio frame configuration notified to the neighbor base station such that each terminal within the corresponding cell may operate based on the information exchanged among the base stations without occurring extra interference.

According to the above embodiment, the base station determines the interference measurement resource based on at least two radio frame configuration informations, measures interferences on the corresponding resources, and feeds back the measurement results to the neighbor base stations so as to predict influence of the inter-base station interference and determine transmission power of the terminal based thereon. Through this inter-base station information exchange and interference measurement method, the base stations using different radio frame configurations are capable of operating without significant interference and, by changing the radio frame configurations constantly according to the variation of the inter-cell traffic conditions and configuring the resource in adaptation to the traffic based on the exchange of the radio frame configurations, improving the entire network throughput.

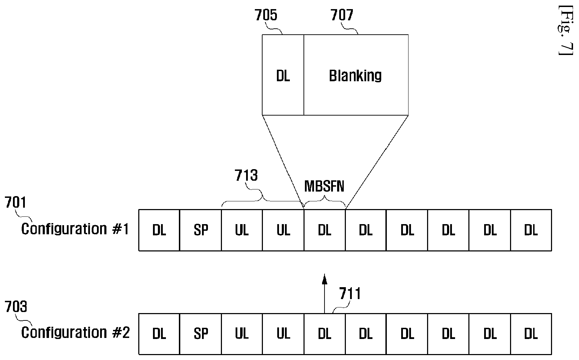

FIG. 7 is a diagram illustrating the structures of the first and second radio frame configurations according to another embodiment of the preset disclosure.

Referring to FIG. 7, the first base station sends the second base station the first radio frame configuration information and Multicast Broadcast Single Frame network (MBSFN) configuration information. At this time, the MBSFN configuration information is a subset of the set of the downlink subframes of the first radio frame configuration.

The second base station configures the uplink subframes of the first radio frame configuration as the first interference measurement sub frame set and the symbols following the third symbol in every MBSFN subframe as the second interference measurement subframe set. The second base station also measures uplink interference signal of neighbor cells during the first interference measurement subframe set and downlink interference signal of the neighbor cell during the second interference measurement subframe set. The second base station sends the first base station the first and second interference measurement informations.

The first and second base stations sends the terminal the third radio frame configuration information including information on at least one subframe using the first radio frame configuration information and MBSFN information received from neighbor base stations and determines the transmission power of the terminal using the first and second interference measurement informations.

Here, the first radio frame configuration information is the reference radio frame configuration information for use among the cells, and this means that both the first and second base stations use the reference radio frame configuration information. Here, configuring the MBSFN information as a subset of the downlink subframes of the first radio frame configuration is to notify the neighbor base station which has received the information of the sub frame for interference measurement. The first base station may predict that the second base station is performing interference measurement to downlink signal at the corresponding subframes. As a consequence, the base station which has received the MBSFN configuration information uses the corresponding subframes for downlink transmission. That is, the base station is capable of determining the downlink subframe position based on the adjacent MBSFN configuration information and starting measurement of the downlink signal at the boundary based on the downlink subframe position. At this time, the base station has to switch from the transmission operation to the reception operation at the third symbol of the MBSFN subframe. Although the first and second symbols of the MBSFN subframe carry the uplink scheduling information but the terminal has not to expect downlink information. This is because the receipt of the downlink control channel at the terminal does not cause any problem in system operation if the base station does not transmit data channel.

The MBSFN configuration information includes the information exchanged among the base station which indicates the downlink subframe available for use as MBSFN subframe. If a base station receives the first radio frame configuration information and the MBSFN subframe configuration information as denoted by reference number 701 from a neighbor base station, it is aware that the subframe #4 is to be used for MBSFN in the first radio frame configuration and thus configures the first and second interference measurement subframe sets based thereon. Since the MBSFN subframe may be used as resource for data channel, it is added to notify the neighbor base station of the MBSFN subframe for use in measurement in an embodiment.

The first interference measurement subframe set consists of uplink subframes in the first radio frame configuration as denoted by reference number 713, and the second interference measurement subframe set consists of a part 707 without exception of up to two first symbols 705 determined for measurement in the MBSFN subframe.

Since the neighbor base station performs uplink transmission always during the first interference measurement subframe set, the received signal measured during the first interference measurement subframe set include the influence of the uplink interference caused by the neighbor base station as the first interference signal.

Since the neighbor base station may use the second interference measurement subframe set as downlink subframe as denoted by reference number 711, the received signal measured during the second interference measurement subframe set include the interference caused by downlink transmission of the neighbor base station as the second interference signal.

During the second interference measurement subframe set, the base station may operate in any of both the uplink and downlink actually. The base station measures interference amount based on the interference signal level at the corresponding subframe and reflects this to the second interference measurement subframe set.

The first and second interference informations measured during the first and second interference measurement subframe sets are transmitted to the neighbor base station such that the neighbor base station is capable of predicting the interference level when it transmits downlink signal during the second interference measurement subframe set and thus checking the distance from the neighbor cell based on the prediction result.

The base station which has measured interference during the first and second interference measurement frame sets may predicts the distance from the neighbor base station based on the measurement result during the second interference measurement subframe set, the determine the transmit powers at the subframes of the first and second interference measurement subframe sets based on the prediction result, and sends the terminal the scheduling control channel including the determination result so as to adjust the influence of the interference to the neighbor cells.

The base station also sends the terminal the first radio frame configuration information of its own and then the power control information based on the measured interference through downlink control channel.

The proposed technology is capable of allowing the base station to determine the resource for use in measuring interference based on at least one radio frame configuration information and additional subframe configuration information and transmits interference measured thereon, thereby predicting influence of inter-base station interference and determining, at the base station measured the interference, transmission power of the terminal in consideration of interference to the neighbor base station using different radio frame configuration based on the prediction result.

Through this inter-base station information exchange and interference measurement method, the base stations using different radio frame configurations are capable of operating without significant interference and, by changing the radio frame configurations constantly according to the variation of the inter-cell traffic conditions and configuring the resource in adaptation to the traffic based on the exchange of the radio frame configurations, improving the entire network throughput.

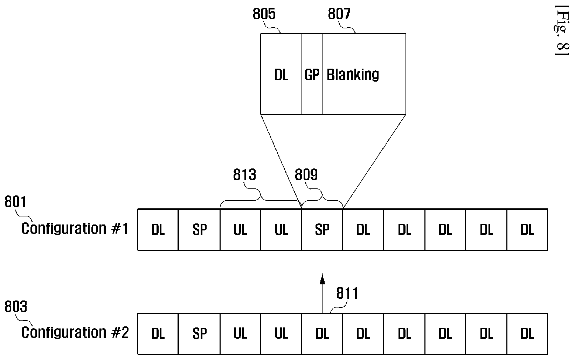

FIG. 8 is a diagram illustrating the structures of the first and second radio frame configurations according to another embodiment of the preset disclosure.

Referring to FIG. 8, the first base station sends the second base station the information on the special subframe 809 in separation of the first radio frame configuration information 801. At this time, the special subframe configuration information 809 is configured as the subset of the set of the downlink subframes of the first radio frame configuration 801. The second base station configures the uplink subframes of the first radio frame configuration into the first interference measurement subframe set and the symbols following a specific symbol of every special subframe into the second interference measurement subframe set as denoted by reference number 8-7. The second base station also measures the uplink interference signal of the neighbor cell during the first interference measurement subframe sets and the downlink interference signal of the neighbor cell during the second interference measurement subframe set and sends the first base station the first and second interference measurement information.

The first and second base stations send the terminal the third radio frame configuration information including at least one radio frame configuration using the first radio frame configuration information 803 and the special subframe information. The first and second base stations also determine the transmission power of the terminal using the first and second interference measurement informations.

Here, the present embodiment is identical with the above embodiment with the exception that the base station is capable of adjusting the number of downlink symbols as denoted by reference number 805 and the number of uplink symbols as denoted by reference number 807. The present embodiment is advantageous in terms of changing the resource amount for use in interference measurement in adaptation to the traffic condition while measuring interference. The present embodiment may be embodied with the function of adjusting the reception timing by adjusting the radio between uplink and downlink according to the size of the cell.

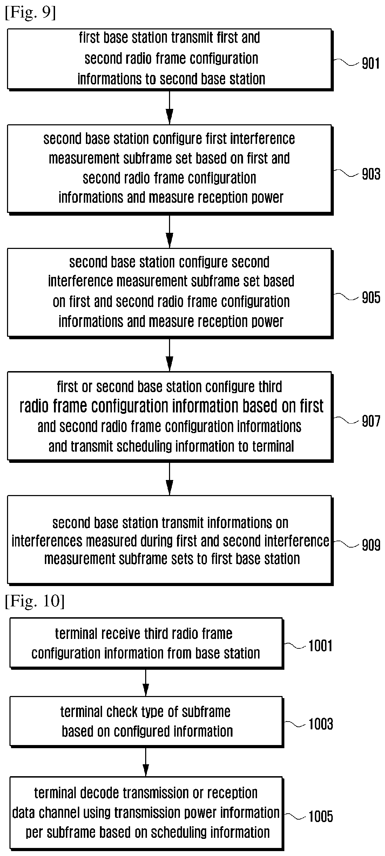

FIG. 9 is a flowchart illustrating the procedure of the base station in the interference measurement method according to an embodiment of the present disclosure.

Referring to FIG. 9, the base station exchanges the first and second radio frame configuration informations with the second base station at operation 901. The first and second radio frame configuration informations are exchanged among the base station. The first radio frame configuration information is the reference radio frame configuration information among the base stations, and the second radio frame configuration information is the radio frame configuration information for use by the first base station. The second radio frame configuration information includes a subset of the set of downlink subframes or the superset of the set of uplink subframes of the first radio frame configuration.

If the radio frame configuration information is received, the base station configures two different resource groups for interference measurement based on the first and second interference measurement subframe sets proposed in the present disclosure at operation 903.

The base station measures the interference amounts during the first and second interference measurement subframe sets at operation 905. Next, the corresponding base station sends the terminal the third radio frame configuration including an uplink subframe subset association with the first radio frame configuration and a downlink subframe subset associated with the second radio frame configuration at operation 907.

The base station may predict the distance from the neighbor base station through measurement during the second interference measurement subframe set and the distance from a terminal located within the coverage area of the neighbor base station through measurement during the first interference measurement subframe set. The base station determines the transmission power at the subframes belonging to the first and second interference measurement subframe sets based on the prediction result and transmits the determination result in the scheduling control channel information so as to adjust the influence of the interference to the neighbor cells.

Finally, the second base station sends the first base station the information on the interferences measured during the first and second interference measurement subframe sets at operation 909.

FIG. 10 is a flowchart illustrating the procedure of the terminal in the interference measurement method according to an embodiment of the present disclosure.

Referring to FIG. 10, the terminal receives the third radio frame configuration information from the base station at operation 1001. Next, the terminal checks the type of the subframe based on the configuration information at operation 1003. Finally, the terminal performs decoding on the transmission or reception channel using the transmission power information per subframe based on the scheduling information at operation 1005.

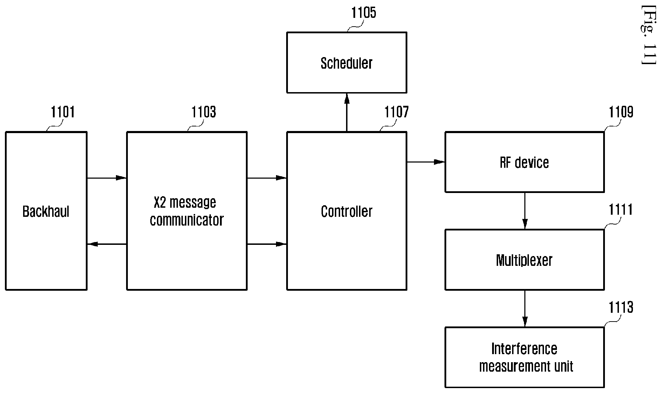

FIG. 11 is a block diagram illustrating a configuration of the base station according to an embodiment of the present disclosure.

Referring to FIG. 11, the controller 1107 controls the inter-base station information communicator 1103 to exchange information with neighbor base stations through backhaul network 1101 as proposed in the present disclosure. The information exchanged among the base stations include at least one radio frame configuration information or subframe information for interference measurement. The controller 1107 configures the first and second interference measurement subframe sets based on the received information and controls the transceiver 1109 to receive signals on the corresponding resources. The base station splits the corresponding signal into the first and second interference measurement subframe sets by means of the multiplexer 1111, measures interferences during the first and second interference measurement subframe sets separately by means of the interference measurement unit 1113, and generates a base station message by means of the inter-base station information communicator 1103, and sends the message to the neighbor base stations through the backhaul network 1101. The controller 1107 also transmits the power information generated based on the first and second interference informations in the control channel for uplink transmission of the terminal or control information for downlink reception by means of the scheduler 1105 and then sends the terminal the radio frame configuration information based on the radio frame configuration information based on the radio frame configuration informations exchanged among the base stations as proposed in the present disclosure.

In an embodiment of the present disclosure, the controller 1107 may be referred to as base station controller, and the transceiver 1109 and the inter-base station information communicator may be integrated into the transceiver.

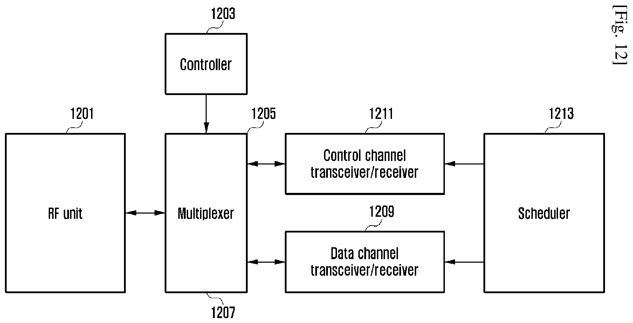

FIG. 12 is a block diagram illustrating a configuration of the terminal according to an embodiment of the present disclosure.

Referring to FIG. 12, the controller 1203 determines the transmission and reception timings of the transceiver 1201 based on the radio frame configuration information received from the base station and transmits and receives the signals multiplexed/demultiplexed by the multiplexer 1205 at the corresponding timings. The controller 1203 controls the control channel transceiver 1211 and the data channel transceiver 1209 to transmit uplink signal and receive downlink signal based on the radio frame configuration information. The scheduler 1213 adjusts the transmission power of the data channel transceiver 1209 based on the power control information included in the scheduling information transmitted by the base station through a control channel and the radio frame configuration information.

According to an embodiment of the present disclosure, the controller 1203 may be referred to as terminal controller.

As described above, the interference measurement method and apparatus of the present disclosure is advantageous in terms of controlling interference in such a way of predicting uplink coverage of a neighbor cell based on the first interference measurement subframe set and downlink coverage of the neighbor cell based on the second interference measurement subframe set and controlling interference on the time/frequency resource, on which inter-base station interference occurs in uplink and downlink, based on the first and second interference informations received from the neighbor base station.

Also, the interference measurement method and apparatus of the present disclosure is advantageous in predicting the relative location of the neighbor base station and changing the configuration of the cell dynamically based on the prediction in the range of not incurring interference, by measuring the interference transmitted by the neighbor base station through the second interference measurement subframe set.

Although various embodiments of the present disclosure have been described using specific terms, the specification and drawings are to be regarded in an illustrative rather than a restrictive sense in order to help understand the present disclosure. It is obvious to those skilled in the art that various modifications and changes can be made thereto without departing from the scope of the appended claims.

## Claims

1. An interference measurement method by a first base station in a time division duplex, TDD, radio communication system, the method comprising:
receiving (901), from a second base station, first radio frame configuration information being used in a cell of the second base station;
receiving (901), from the second base station, second radio frame configuration information to be used for the cell of the second base station; measuring (903) a first interference, caused by an uplink signal of the second base station, on a first subframe set consisting of subframes that are uplink in both the first and second radio frame configuration information;
measuring (905) a second interference, caused by a downlink signal of the second base station, on a second subframe set consisting of subframes that are downlink in the second radio frame configuration but not downlink in the first radio frame configuration; and
performing (907) scheduling for a terminal based on the first interference and the second interference.

2. The method of claim 1, wherein the second radio frame configuration comprises uplink subframes corresponding to a subset of uplink subframes of the first radioframe configuration.

3. The method of claim 1, further comprising:
transmitting information on the measured first interference and second interference to the second base station.

4. The method of claim 1, further comprising transmitting a third radio frame configuration information to the terminal, the third radio frame configuration comprising uplink subframes corresponding to a subset of uplink subframes of the first radioframe configuration and downlink subframes corresponding to a subset of downlink subframes of the second radioframe configuration.

5. An interference measurement method by a time division duplex, TDD, radio communication system, the method comprising:
transmitting (901) from a first base station to a second base station, first radioframe configuration information being used in a cell of the first base station; and
transmitting (901) from a first base station to the second base station, second radioframe configuration information to be used for the cell of the second base station,
wherein a first interference, caused by an uplink signal of the first base station, is measured by the second base station on a first subframe set consisting of subframes that are uplink in both the first and second radioframe configuration information, and
wherein a second interference, caused by a downlink signal of the first base station, is measured by the second base station on a second subframe set consisting of subframes that are downlink in the second radioframe configuration but not downlink in the first radioframe configuration and
performing scheduling for a terminal at the second base station based on the first interference and the second interference.

6. The method of claim 5, further comprising:
receiving information on the measured first interference and second interference from the second base station; and
determining a distance from the second base station based on the received information.

7. The method of claim 5, wherein the second radio frame configuration comprises uplink subframes corresponding to a subset of uplink subframes of the first radioframe configuration.

8. A first base station which measures interference in a time division duplex, TDD, radio communication system, the base station comprising:
a transceiver (1103) configured to communicate with a second base station; and
a controller (1107) configured to control the transceiver to receive, from a second base station, first subframe configuration information being used in a cell of the second base station, and to receive, from the second base station, second subframe configuration information to be used for the cell of the second base station, and to measure a first interference, caused by an uplink signal of the second base station, on a first subframe set consisting of subframes that are uplink in both the first and second radioframe configuration information; and to measure a second interference, caused by a downlink signal of the second base station, on a second subframe set consisting of subframes that are downlink in the second radioframe configuration but not downlink in the first radioframe configuration and means adapted to perform scheduling for a terminal based on the first interference and the second interference.

9. The first base station of claim 8, wherein the second radioframe configuration comprises uplink subframes corresponding to a subset of uplink subframes of the first radioframe configuration.

10. The first base station of claim 9, wherein the controller is configured to control the transceiver to transmit information on the measured first interference and second interference to the second base station.

11. The base station of claim 9, wherein the controller is configured to configure a third radioframe configuration information and controls the transceiver to transmit the third radioframe configuration information to the terminal, and the third radioframe configuration comprises uplink subframes corresponding to a subset of uplink subframes of the first radioframe configuration and downlink subframes corresponding to a subset of downlink subframes of the second radioframe configuration.

12. A time division duplex, TDD, radio communication system comprising a first base station and a second base station, the first base station which measures interference in the TDD radio communication system, comprises:
a transceiver (1103) configured to communicate with the second base station; and
a controller (1107) configured to control the transceiver to transmit, to the second base station, first radioframe configuration information being used in a cell of the first base station, and transmit to the second base station, second radioframe configuration information to be used for a cell of the second base station,
wherein a first interference, caused by an uplink signal of the first base station, is measured by the second base station on a first subframe set consisting of subframes that are uplink in both the first and second radioframe configuration information, and
wherein a second interference, caused by a downlink signal of the first base station, is measured by the second base station on a second subframe set consisting of subframes that are downlink in the second radioframe configuration but not downlink in the first radioframe configuration and wherein the second base station comprises
means adapted to perform scheduling for a terminal at the second base station based on the first interference and the second interference.

13. The system of claim 12, wherein the controller is configured to control the transceiver to receive information on the measured first interference from the second base station and determines a distance from the second base station based on the received interference measurement result, and ,
wherein the second radio frame configuration comprises uplink subframes corresponding to a subset of uplink subframes of the first radio frame configuration.

## Patentansprüche

1. Interferenzmessverfahren durch eine erste Basisstation in einem Zeitduplex-, (TDD)-Funkkommunikationssystem, wobei das Verfahren Folgendes umfasst:
Empfangen (901) von einer zweiten Basisstation von ersten Funkrahmenkonfigurationsinformationen, die in einer Zelle der zweiten Basisstation verwendet werden;
Empfangen (901) von der zweiten Basisstation von zweiten Funkrahmenkonfigurationsinformationen, die für die Zelle der zweiten Basisstation verwendet werden sollen; Messen (903) einer ersten Interferenz, die durch ein Uplink-Signal der zweiten Basisstation verursacht wird, an einem ersten Subrahmensatz, der aus Subrahmen besteht, die sowohl in den ersten als auch in den zweiten Funkrahmenkonfigurationsinformationen aufwärts gerichtet sind;
Messen (905) einer zweiten Interferenz, die durch ein Downlink-Signal der zweiten Basisstation verursacht wird, an einem zweiten Subrahmensatz, der aus Subrahmen besteht, die in der zweiten Funkrahmenkonfiguration abwärts gerichtet sind, in der ersten Funkrahmenkonfiguration jedoch nicht abwärts gerichtet sind; und
Durchführen (907) einer Planung für ein Endgerät basierend auf der ersten Interferenz und der zweiten Interferenz.

2. Verfahren nach Anspruch 1, wobei die zweite Funkrahmenkonfiguration Uplink-Subrahmen umfasst, die einer Untergruppe von Uplink-Subrahmen der ersten Funkrahmenkonfiguration entsprechen.

3. Verfahren nach Anspruch 1, ferner umfassend:
Übertragen von Informationen über die gemessene erste Interferenz und zweite Interferenz an die zweite Basisstation.

4. Verfahren nach Anspruch 1, ferner umfassend das Übertragen von dritten Funkrahmenkonfigurationsinformationen an das Endgerät, wobei die dritte Funkrahmenkonfiguration Uplink-Subrahmen umfasst, die einer Untergruppe von Uplink-Subrahmen der ersten Funkrahmenkonfiguration entsprechen, und Downlink-Subrahmen, die einer Untergruppe von Downlink-Subrahmen der zweiten Funkrahmenkonfiguration entsprechen.

5. Interferenzmessverfahren durch ein Zeitduplex-, (TDD)-Funkkommunikationssystem, wobei das Verfahren Folgendes umfasst:
Senden (901) von ersten Funkrahmenkonfigurationsinformationen, die in einer Zelle der zweiten Basisstation verwendet werden, durch eine erste Basisstation an eine zweite Basisstation; und
Senden (901) von zweiten Funkrahmenkonfigurationsinformationen, die in einer Zelle der ersten Basisstation verwendet werden sollen, durch eine erste Basisstation an eine zweite Basisstation,
wobei eine erste Interferenz, die durch ein Uplink-Signal der ersten Basisstation verursacht wird, durch die zweite Basisstation an einem ersten Subrahmensatz, der aus Subrahmen besteht, gemessen wird, die sowohl in den ersten als auch in den zweiten Funkrahmenkonfigurationsinformationen aufwärts gerichtet sind, und
wobei eine zweite Interferenz, die durch ein Downlink-Signal der ersten Basisstation verursacht wird, durch eine zweite Basisstation an einem zweiten Subrahmensatz, der aus Subrahmen besteht, gemessen wird, die in der zweiten Funkrahmenkonfiguration abwärts gerichtet sind, in der ersten Funkrahmenkonfiguration jedoch nicht abwärts gerichtet sind; und
Durchführen einer Planung für ein Endgerät an der zweiten Basisstation basierend auf der ersten Interferenz und der zweiten Interferenz.

6. Verfahren nach Anspruch 5, ferner umfassend:
Empfangen von Informationen über die gemessene erste Interferenz und zweite Interferenz von der zweiten Basisstation; und
Bestimmen einer Entfernung von der zweiten Basisstation basierend auf den empfangenen Informationen.

7. Verfahren nach Anspruch 5, wobei die zweite Funkrahmenkonfiguration Uplink-Subrahmen umfasst, die einer Untergruppe von Uplink-Subrahmen der ersten Funkrahmenkonfiguration entsprechen.

8. Erste Basisstation, die Interferenzen in einem Zeitduplex-, (TDD)-Funkkommunikationssystem misst, wobei die Basisstation Folgendes umfasst:
einen Transceiver (1103), der konfiguriert ist, um mit einer zweiten Basisstation zu kommunizieren; und
eine Steuerung (1107), die konfiguriert ist, um den Transceiver zu steuern, um von einer zweiten Basisstation erste Subrahmenkonfigurationsinformationen zu empfangen, die in einer Zelle der zweiten Basisstation verwendet werden, und um von der zweiten Basisstation zweite Subrahmenkonfigurationsinformationen zu empfangen, die für die Zelle der zweiten Basisstation verwendet werden sollen und um eine erste Interferenz, die durch ein Uplink-Signal der zweiten Basisstation verursacht wird, an einem Subrahmensatz, der aus Subrahmen besteht, die sowohl in den ersten als auch in den zweiten Funkrahmenkonfigurationsinformationen aufwärts gerichtet sind, zu messen; und um eine zweite Interferenz, die durch ein Downlink-Signal der zweiten Basisstation verursacht wird, an einem zweiten Subrahmensatz, der aus Subrahmen besteht, die in der zweiten Funkrahmenkonfiguration abwärts gerichtet sind, aber in der ersten Funkrahmenkonfiguration nicht abwärts gerichtet sind, zu messen, und Mittel, die dafür ausgelegt sind, eine Planung für ein Endgerät basierend auf der ersten Interferenz und der zweiten Interferenz durchzuführen.

9. Erste Basisstation nach Anspruch 8, wobei die zweite Funkrahmenkonfiguration Uplink-Subrahmen umfasst, die einer Untergruppe von Uplink-Subrahmen der ersten Funkrahmenkonfiguration entsprechen.

10. Erste Basisstation nach Anspruch 9, wobei die Steuerung konfiguriert ist, den Transceiver zu steuern, um Informationen über die gemessene erste Interferenz und zweite Interferenz an die zweite Basisstation zu senden.

11. Basisstation nach Anspruch 9, wobei die Steuerung konfiguriert ist, um eine dritte Funkrahmenkonfigurationsinformation zu konfigurieren, und den Transceiver steuert, um die dritten Funkrahmenkonfigurationsinformationen an das Endgerät zu senden, und die dritte Funkrahmenkonfiguration Uplink-Subrahmen umfasst, die einer Untergruppe von Uplink-Subrahmen der ersten Funkrahmenkonfiguration und Downlink-Subrahmen, die einer Untergruppe von Downlink-Subrahmen der zweiten Funkrahmenkonfiguration entsprechen.

12. Zeitduplex-, (TDD)-Funkkommunikationssystem, das eine erste Basisstation und eine zweite Basisstation umfasst, wobei die erste Basisstation, die Interferenzen in dem TDD-Funkkommunikationssystem misst, Folgendes umfasst:
einen Transceiver (1103), der konfiguriert ist, um mit der zweiten Basisstation zu kommunizieren; und
eine Steuerung (1107), die konfiguriert ist, um den Transceiver zu steuern, um an die zweite Basisstation erste Funkrahmenkonfigurationsinformationen zu senden, die für eine Zelle der ersten Basisstation verwendet werden, und um an die zweite Basisstation zweite Funkrahmenkonfigurationsinformationen zu senden, die in einer Zelle der zweiten Basisstation verwendet werden sollen,
wobei eine erste Interferenz, die durch ein Uplink-Signal der ersten Basisstation verursacht wird, von der zweiten Basisstation in einem ersten Subrahmensatz, der aus Subrahmen besteht, gemessen wird, die sowohl in den ersten als auch in den zweiten Funkrahmenkonfigurationsinformationen aufwärts gerichtet sind, und
wobei eine zweite Interferenz, die durch ein Downlink-Signal der ersten Basisstation verursacht wird, durch eine zweite Basisstation an einem zweiten Subrahmensatz, der aus Subrahmen besteht, gemessen wird, die in der zweiten Funkrahmenkonfiguration abwärts gerichtet sind, in der ersten Funkrahmenkonfiguration jedoch nicht abwärts gerichtet sind; und wobei die zweite Basisstation Mittel umfasst, die dafür ausgelegt sind, eine Planung für ein Endgerät basierend auf der ersten Interferenz und der zweiten Interferenz durchzuführen.

13. System nach Anspruch 12, wobei die Steuerung konfiguriert ist, um den Transceiver zu steuern, um Informationen über die gemessene erste Interferenz von der zweiten Basisstation zu empfangen und einen Abstand von der zweiten Basisstation basierend auf dem empfangenen Interferenzmessergebnis bestimmt, und
wobei die zweite Funkrahmenkonfiguration Uplink-Subrahmen umfasst, die einer Untergruppe von Uplink-Subrahmen der ersten Funkrahmenkonfiguration entsprechen.

## Revendications

1. Procédé de mesure d'interférences par une première station de base dans un système de communication radio à duplexage par répartition dans le temps, TDD, le procédé comprenant :
recevoir (901), à partir d'une deuxième station de base, des premières informations de configuration de trame radio étant utilisées dans une cellule de la deuxième station de base ;
recevoir (901), à partir de la deuxième station de base, des deuxièmes informations de configuration de trame radio à être utilisées pour la cellule de la deuxième station de base ;
mesurer (903) une première interférence, causée par un signal de liaison montante de la deuxième station de base, sur un premier ensemble de sous-trames constitué de sous-trames qui sont en liaison montante à la fois dans les première et deuxième informations de configuration de trame radio ;
mesurer (905) une deuxième interférence, causée par un signal de liaison descendante de la deuxième station de base, sur un deuxième ensemble de sous-trames constitué de sous-trames qui sont en liaison descendante dans la deuxième configuration de trame radio mais pas en liaison descendante dans la première configuration de trame radio ; et
effectuer (907) une programmation pour un terminal sur la base de la première interférence et de la deuxième interférence.

2. Procédé selon la revendication 1, où la deuxième configuration de trame radio comprend des sous-trames de liaison montante qui correspondent à un sous-ensemble de sous-trames de liaison montante de la première configuration de trame radio.

3. Procédé selon la revendication 1, comprenant en outre :
transmettre des informations sur la première interférence et la deuxième interférence mesurées à la deuxième station de base.

4. Procédé selon la revendication 1, comprenant en outre transmettre une troisième information de configuration de trame radio au terminal, la troisième configuration de trame radio comprenant des sous-trames de liaison montante qui correspondent à un sous-ensemble de sous-trames de liaison montante de la première configuration de trame radio et des sous-trames de liaison descendante qui correspondent à un sous-ensemble de sous-trames de liaison descendante de la deuxième configuration de trame radio.

5. Procédé de mesure d'interférences par un système de communication radio à duplexage par répartition dans le temps, TDD, le procédé comprenant :
transmettre (901) d'une première station de base à une deuxième station de base, des premières informations de configuration de trame radio étant utilisées dans une cellule de la première station de base ; et
transmettre (901) d'une première station de base à la deuxième station de base, des deuxièmes informations de configuration de trame radio à être utilisées pour la cellule de la deuxième station de base,
où une première interférence, causée par un signal de liaison montante de la première station de base, est mesurée par la deuxième station de base sur un premier ensemble de sous-trames constitué de sous-trames qui sont en liaison montante à la fois dans les première et deuxième informations de configuration de trame radio, et
où une deuxième interférence, causée par un signal de liaison descendante de la première station de base, est mesurée par la deuxième station de base sur un deuxième ensemble de sous-trames constitué de sous-trames qui sont en liaison descendante dans la deuxième configuration de trame radio mais pas en liaison descendante dans la première configuration de trame radio et effectuer une programmation pour un terminal à la deuxième station de base sur la base de la première interférence et de la deuxième interférence.

6. Procédé selon la revendication 5, comprenant en outre :
recevoir des informations sur la première interférence et la deuxième interférence mesurées de la deuxième station de base ; et
déterminer une distance à partir de la deuxième station de base sur la base des informations reçues.

7. Procédé selon la revendication 5, où la deuxième configuration de trame radio comprend des sous-trames de liaison montante qui correspondent à un sous-ensemble de sous-trames de liaison montante de la première configuration de trame radio.

8. Première station de base qui mesure des interférences dans un système de communication radio à duplexage par répartition dans le temps, TDD, la station de base comprenant :
un émetteur-récepteur (1103) configuré pour communiquer avec une deuxième station de base ; et
un contrôleur (1107) configuré pour contrôler l'émetteur-récepteur pour recevoir, à partir d'une deuxième station de base, des premières informations de configuration de sous-trame étant utilisées dans une cellule de la deuxième station de base, et pour recevoir, à partir de la deuxième station de base, des deuxièmes informations de configuration de sous-trame à être utilisées pour la cellule de la deuxième station de base, et pour mesurer une première interférence, causée par un signal de liaison montante de la deuxième station de base, sur un premier ensemble de sous-trames constitué de sous-trames qui sont en liaison montante à la fois dans les première et deuxième informations de configuration de trame radio ; et pour mesurer une deuxième interférence, causée par un signal de liaison descendante de la deuxième station de base, sur un deuxième ensemble de sous-trames constitué de sous-trames qui sont en liaison descendante dans la deuxième configuration de trame radio mais pas en liaison descendante dans la première configuration de trame radio et des moyens adaptés pour effectuer une programmation pour un terminal sur la base de la première interférence et de la deuxième interférence.

9. Première station de base selon la revendication 8, où la deuxième configuration de trame radio comprend des sous-trames de liaison montante qui correspondent à un sous-ensemble de sous-trames de liaison montante de la première configuration de trame radio.

10. Première station de base selon la revendication 9, où le contrôleur est configuré pour contrôler l'émetteur-récepteur pour transmettre des informations sur la première interférence et la deuxième interférence mesurées à la deuxième station de base.

11. Station de base selon la revendication 9, où le contrôleur est configuré pour configurer une troisième information de configuration de trame radio et contrôler l'émetteur-récepteur pour transmettre la troisième information de configuration de trame radio au terminal, et la troisième configuration de trame radio comprend des sous-trames de liaison montante qui correspondent à un sous-ensemble de sous-trames de liaison montante de la première configuration de trame radio et des sous-trames de liaison descendante qui correspondent à un sous-ensemble de sous-trames de liaison descendante de la deuxième configuration de trame radio.

12. Système de communication radio à duplexage par répartition dans le temps, TDD, comprenant une première station de base et une deuxième station de base, la première station de base qui mesure des interférences dans le système de communication radio à TDD, comprend :
un émetteur-récepteur (1103) configuré pour communiquer avec la deuxième station de base ; et
un contrôleur (1107) configuré pour contrôler l'émetteur-récepteur pour transmettre, à la deuxième station de base, des premières informations de configuration de trame radio étant utilisées dans une cellule de la première station de base, et transmettre à la deuxième station de base, des deuxièmes informations de configuration de trame radio à être utilisées pour une cellule de la deuxième station de base,
où une première interférence, causée par un signal de liaison montante de la première station de base, est mesurée par la deuxième station de base sur un premier ensemble de sous-trames constitué de sous-trames qui sont en liaison montante à la fois dans les première et deuxième informations de configuration de trame radio, et
où une deuxième interférence, causée par un signal de liaison descendante de la première station de base, est mesurée par la deuxième station de base sur un deuxième ensemble de sous-trames constitué de sous-trames qui sont en liaison descendante dans la deuxième configuration de trame radio mais pas en liaison descendante dans la première configuration de trame radio et où la deuxième station de base comprend des moyens adaptés pour effectuer une programmation pour un terminal à la deuxième station de base sur la base de la première interférence et de la deuxième interférence.

13. Système selon la revendication 12, où le contrôleur est configuré pour contrôler l'émetteur-récepteur pour recevoir des informations sur la première interférence mesurée de la deuxième station de base et déterminer une distance à partir de la deuxième station de base sur la base du résultat de mesure d'interférences reçu, et,
où la deuxième configuration de trame radio comprend des sous-trames de liaison montante qui correspondent à un sous-ensemble de sous-trames de liaison montante de la première configuration de trame radio.
